Europäisches Patentamt

European Patent Office

Office européen des brevets

(19)

(11) EP 0 782 328 A2

(12) **EUROPEAN PATENT APPLICATION**

(43) Date of publication:
02.07.1997 Bulletin 1997/27

(51) Int Cl.$^6$: **H04N 1/50**

(21) Application number: 96309343.0

(22) Date of filing: 20.12.1996

(84) Designated Contracting States:
DE FR GB

(30) Priority: 29.12.1995 US 581689

(71) Applicant: **XEROX CORPORATION**
**Rochester New York 14644 (US)**

(72) Inventors:
• **Paoli, Thomas L.**
**Los Altos, California 94022 (US)**

• **Bour, David P.**
**Cupertino, California 05914 (US)**
• **Treat, David W.**
**San Jose, California 95118 (US)**

(74) Representative: **Phillips, Margaret Dawn et al**
**Rank Xerox Ltd**
**Patent Department**
**Parkway**
**Marlow Buckinghamshire SL7 1YL (GB)**

(54) **Polarization multiplexing multiple beam raster output scanning system**

(57)     Described herein is a polarization multiplexed laser which emits two beams of the same wavelength but orthogonal polarization from a single laser source for use in a multiple beam raster output scanning system. The multiple beam raster output scanning is obtained from a single raster scanning system (ROS) with a rotating polygon mirror (110), and a single set of scan optics (118) for use in single or multiple station printers. A plurality of coaxially overlapping laser beams (214, 216, 218, 220) from a laser array of dissimilar wavelengths and dissimilar polarization states, are deflected using a common mirror surface area and are subsequently separated by an optical polarized beam separator (160) and optical dichroic beam separators (230, 240). The separated laser beams (214, 216, 218, 220) are directed onto associated photoreceptors (250, 260, 270, 280) such that their optical path lengths from the source location to their respective photoreceptors (250, 260, 270, 280) are substantially the same.

FIG. 10

EP 0 782 328 A2

## Description

This invention relates to a multiple beam raster output scanning system and, more particularly, to a multiple beam raster output scanning system with polarization multiplexing lasers.

In xerographic printing (also called electrophotographic printing), a latent image is formed on a charged photoreceptor, usually by raster sweeping a modulated laser beam across the photoreceptor. The latent image is then used to create a permanent image by transferring and fusing toner that was electrostatically attracted to the latent image onto a recording medium, usually plain paper.

While xerographic printing has been successful, problems arise when attempting to print at very high speed. One set of problems relates to the sweeping of the laser beam across the photoreceptor. As printing speed increases, it becomes more and more difficult to sweep the laser beam as fast as is required. While other sweeping methods are known, the most common method is to deflect the laser beam from a rotating mirror. Thus one way of increasing the sweep speed is to rotate the mirror faster. While this helps, extremely fast mirror rotation requires an expensive drive motor and bearings and an increasingly more powerful laser.

Other techniques of increasing the raster sweep speed are 1) to sweep the laser beam using a multifaceted, rotating polygon mirror (and a related set of optics), and/or 2) to sweep several laser beams simultaneously. Rotating polygon mirrors and related optics are so common that they are generically referred to as ROSs (Raster Output Scanners). Printers that sweep several beams simultaneously are referred to as multiple beam printers.

The raster sweep rate problem becomes even more apparent when printing in color at high speed. This is because a color xerographic printer requires a separate image for each color printed, hereinafter called a system color. While a dual color printer requires only two images, a full color printer typically requires four images, one for each of the three primary colors of cyan, magenta, yellow, and an additional one for black. Color prints are currently produced by sequentially transferring and fusing overlapped system colors onto a single recording medium which is passed multiple times, once for each system color, through the printer. Such printers are referred to as multiple pass printers. Conceptually, one can imprint multiple colors on a recording medium in one pass through the system by using a sequence of xerographic stations, one for each system color. If each station is associated with a separate photoreceptor, the printer is referred to as a multistation printer; if the stations use different positions on the same photoreceptor, the printer is referred to as a single station/multiposition printer. Multistation and single station/multi position printers have greater printed page output than a multipass printer operating at the same raster sweep speed.

However, the commercial introduction of multistation and single station/multiposition printers has been delayed by 1) cost problems, at least partially related to the cost of multiple xerographic elements and the associated ROSs, and 2) image quality problems, at least partially related to the difficulty of producing spots on each photoreceptor and then subsequently registering (overlapping) the images on the photoreceptor(s).

Proposed prior art multistation printers usually use individual ROSs (each comprised of separate polygon mirrors, lenses, and related optical components) for each station. Problems with such systems include the high cost of producing nearly identical multiple ROSs and the difficulty of registering the system colors.

A partial solution to the problems of multistation xerographic systems with individual ROSs is a recording apparatus (printer) having multiple recording stations and multiple lens systems, but only one rotating polygon mirror. Thus, the cost of the system is relatively low. However, differences in the lenses and mirror surfaces could still cause problems with accurate registration of different latent images.

Another approach to overcoming the problems of multistation printers having individual ROSs is spatially overlapping a plurality of beams using an optical beam combiner, deflecting the overlapped beams using a single polygon mirror, separating the deflected beams using an optical filter (and polarizers if more than two beams are used), and directing the separated beams onto associated photoreceptors. The advantage of overlapping the laser beams is a significant cost reduction since the ROS is shared. The use of optical beam combiners to overlap beams so that they have similar optical axes and similar sized spots is thought to be difficult, expensive, and time consuming.

One possible solution is disclosed in US-A-5 243 339, wherein a raster output scanning system employs a rotating polygon mirror that simultaneously deflects a plurality of clustered, dissimilar wavelength laser beams having common optical axes and substantially common origins from common mirror surface areas. The clustered beams are subsequently separated by a plurality of optical filters and are then directed onto associated photoreceptors of a multistation printer. However, economically feasible optical filters require the dissimilar beams to be separated by a sufficiently large wavelength. Typically a wavelength difference of about 50nm is required such as lasers emitting beams at 645nm, 695nm, 755nm, and 825nm. Since laser emission from closely spaced laser sources over this wavelength span is not yet available using one semiconductor material, practical systems need to integrate two distinctly different material systems, such as AlGaAs and AlGaInP. Additionally, the wide wavelength span necessitates that the photoreceptive surface(s) has adequate response over that span, which will include the infrared portions of the optical spectrum. However, few photoreceptive surfaces respond well in the infrared.

Another possible solution is disclosed in US-A-5 343 224, wherein a raster output scanning system employs a rotating polygon mirror that simultaneously deflects a plurality of clustered, dissimilar wavelength, dissimilar polarization state laser beams having common optical axes and substantially common origins from common mirror surface areas. The clustered beams are subsequently separated by a plurality of optical and polarization filters and are then directed onto associated photoreceptors of a multistation printer.

However, under both proposed solutions, at least one laser is required for each position or station. Thus, printing at four stations requires an array of four lasers, each with a different wavelength or polarization state. As the printing speed increases, larger arrays are needed for the multiple beam raster output scanning system in order to simultaneously expose each station with more than one beam. For example, dual beam printing at each of four stations requires eight lasers and quadbeam printing at each of four stations requires sixteen lasers.

This progression shows that the number of lasers and therefore the physical size of the laser array becomes increasingly large leading to increasingly complex construction of the semiconductor laser array structure and the scanning optics to separate and locate the beams on the stations.

Methods for reducing the number of different lasers in a raster output scanning system required to address multiple stations can reduce the complexity of the laser source and the cost of the related scanning optics to separate and locate the beams on the stations.

It is an object of this invention to provide a single laser source to expose more than one position on a station or expose positions on more than one station in a multiple beam raster output scanning system.

It is another object of this invention to provide a polarization multiplexing laser source in a multiple beam raster output scanning system.

In accordance with one aspect of the present invention, there is provided a raster output scanner comprising:- polarization multiplexing means for producing at least first and second coaxially overlapping, orthogonally polarized laser beams on a first optical path; means for sweeping the coaxially overlapping, orthogonally polarized laser beams onto a second optical path; and optical beam separating means disposed on the second optical path for separating and directing at least the first laser beam onto a third optical path and at least the second laser beam onto a fourth optical path.

A polarization multiplexed laser emits two beams of the same wavelength but orthogonal polarization from a single laser source for use in a multiple beam raster output scanning system. The multiple beam raster output scanning is obtained from a single raster scanning system (ROS) with a rotating mirror, beneficially a polygon mirror, and a single set of scan optics for use in single or multiple station printers. A plurality of coaxially overlapping laser beams from the same laser source, but of dissimilar polarization states, are deflected using a common mirror surface area and are subsequently separated by a plurality of optical polarized beam separators and optical dichroic beam separators. The separated laser beams are directed onto associated photoreceptors such that their optical path lengths from the source location to their respective photoreceptors are substantially the same. A dual laser array will emit four beams of dissimilar wavelengths and dissimilar polarization states.

The separated laser beams are subsequently directed onto associated photoreceptive regions of a single station/multiposition printer, or onto associated photoreceptors of a multistation printer. Similarly dimensioned and registered spots are readily obtained on all photoreceptive regions, beneficially by establishing a substantially similar optical path length for each laser beam.

In accordance with one embodiment of the present invention, there is provided a raster output scanner, comprising: polarization multiplexing means for producing overlapping and coaxial first, second, third, and fourth laser beams, wherein the first and second laser beams have differing wavelengths but similar polarizations, and wherein the third and fourth laser beams have differing wavelengths but similar polarizations, and wherein the polarizations of the first laser beam and the fourth laser beam differ; means for directing the first, second, third, and fourth laser beams onto a first optical path; means for sweeping the first, second, third and fourth laser beams along a second optical path; an optical polarized beam separator disposed on the second optical path, the optical polarized beam separator for directing the first and second laser beams onto a third optical path and for directing the third and fourth laser beam onto a fourth optical path; a first dichroic beam separator disposed on the third optical path, the first dichroic beam separator for directing the first laser beam onto a fifth optical path and the second laser beam onto a sixth optical path; and a second dichroic beam separator disposed on the fourth optical path, the second dichroic beam separator for directing the third laser beam onto a seventh optical path and for directing the fourth laser beam onto an eighth optical path.

In accordance with another embodiment of the present invention, there is provided a raster output scanner, comprising: polarization multiplexing means for producing overlapping and coaxial first, second, third, and fourth laser beams, wherein the first and second laser beams have similar wavelengths but differing polarizations, and wherein the third and fourth laser beams have similar wavelengths but differing polarizations, and wherein the wavelengths of laser beams one and three differ; means for directing the first, second, third, and fourth laser beams onto a first optical path; means for sweeping the first, second, third and fourth laser beams along a second optical path; a dichroic beam separator disposed on the second optical path, the dichroic beam separator for directing the first and second laser beams onto a third optical path and for directing the third and fourth laser beams onto a fourth optical path; a first optical polarized beam separator disposed on the third optical path, the first optical polarized beam separator for directing the first laser beam onto a fifth optical path and for directing the second laser beam onto a sixth optical path; and a second optical polarized beam separator disposed on the fourth optical path, the second optical polarized beam separator for directing the third laser beam onto a seventh optical path and for directing the fourth laser beam onto an eighth optical path.

Other objects and attainments together with a fuller understanding of the invention will become apparent and appreciated by referring, by way of example only, to the following description taken in conjunction with the accompanying drawings in which:-

Figure 1 is a graph showing the gain-current characteristic of a polarization multiplexing semiconductor laser structure formed according to the present invention;

Figure 2 is a schematic illustration of the cross-section side view of a polarization multiplexing buried ridge semiconductor laser structure formed according to the present invention;

Figure 3 is a schematic illustration of a semiconductor laser structure with an intracavity modulator section formed according to the present invention;

Figure 4 is a graph showing the timing sequences for writing data using both TE-mode and TM-mode from a single polarization multiplexed laser diode;

Figure 5 is a schematic illustration of a raster output scanner (ROS) used in the various illustrated embodiments of the present invention;

Figure 6 is a schematic illustration of a dual laser beam raster output scanning (ROS) apparatus according to a first embodiment of the present invention;

Figure 7 shows the reflection/transmission characteristics of a polarized beam separator (as used in various embodiments of the present invention);

Figure 8 is a schematic illustration of a dual laser beam raster output scanning apparatus according to a second embodiment of the present invention;

Figure 9 is a schematic illustration of a dual laser array semiconductor laser structure with two polarization multiplexed laser sources for emitting four beams of two different wavelengths and two different polarization states formed according to the present invention;

Figure 10 shows a simplified schematic view of a four laser beam raster output scanner (ROS) apparatus according to third embodiment of the present invention;

Figure 11 shows the reflection/transmission characteristics of a dichroic beam separator (as used in various embodiments of the present invention); and

Figure 12 shows a simplified schematic view of a four laser beam raster output scanner apparatus according to a fourth embodiment of the present invention.

Through polarization multiplexing, a single laser diode can be used to produce two different polarized beams of nominally the same wavelength which are easily separated based on their orthogonal polarization. The light beam output from a polarization multiplexed laser diode can be modulated rapidly enough so that the diode emission could contain two separate data streams, one encoded in the TE-polarized beam and one encoded in the TM-polarized beam. Because of the orthogonal polarization fields associated with the two beams, a raster output scanning system could easily distinguish between the TE and TM beams to separate and locate the beams on different printing stations. Since two beams will be emitted from one laser source, the number of different lasers required in a multiple station/position printing system is reduced by half.

Quantum well (QW) lasers normally emit coherent light in the transverse electric (TE) polarization rather than the transverse magnetic (TM) polarization. In most semiconductor materials allowing heavy hole and light hole transition, the $n=1$ heavy hole transition is the fundamental (lowest energy) transition and the lowest energy state is the state whose population is most easily inverted. The heavy hole is lowest in energy because the quantum shifts are inversely proportional to the effective mass; therefore, the light hole levels are shifted to higher energy levels than the heavy hole levels.

In a quantum well laser, the TE-mode gain arises from the heavy hole transition, while the TM-mode gain is provided by the light hole transitions.

Individually addressable quantum well (QW) lasers can however emit coherent light in the transverse electric (TE) or in the transverse magnetic (TM) mode. Quantum well (QW) lasers can switch from emitting coherent light in the TE-polarization mode to the TM-polarization mode, or vice versa. This ability to emit coherent light in either the TE- or TM-polarization states is accomplished in certain semiconductor material laser structures by controlling the type of strain induced in the epitaxially deposited active region due to lattice mismatches with the substrate.

Thus, TE-polarization gain will predominate in most material systems allowing heavy hole and light hole transition, when the $n=1$ heavy hole is the lowest energy state and therefore the state whose population is most easily inverted, which is usually true for unstrained and compressively strained III-V alloy systems. However, by reversing the light hole and heavy hole band edges, achieved in certain semiconductor material laser structures by inducing tensile strain into the active region, TM-polarization gain will predominate. In the degenerate condition, where the light hole and heavy hole bands are substantially coincident in energy, the polarization of the emission can be determined by threshold carrier density and other factors, such as temperature, facet reflectivity, cavity length and intracavity optical loss.

TM-polarization can be obtained by subjecting the active layer to biaxial tension, parallel to the plane of the junction of the active layer and the cladding layers.

In general, the desired polarization mode laser emitter can be achieved with either a single quantum well, carefully adjusted, or separate quantum wells for TE- and TM-mode gain with the polarization mode of laser oscillation dependent upon the modal gain characteristics and the threshold gain. The necessary gain characteristic has one polarization with lowest transparency current, and the orthogonal polarization with a greater peak gain. For some range of active region parameters (thickness, composition, placement within the confining region, etc.), these characteristics can be obtained, and so the polarization will be determined by the threshold gain. Therefore, the polarization of each device can be selected, for example, by introducing an additional loss into one of the devices, thereby forcing it to emit coherent light in the higher-gain polarization. The polarization of each device could be switched, by using an intracavity loss modulator.

On the other hand, a device without this additional loss will simply emit coherent light in the polarization which has lowest transparency current.

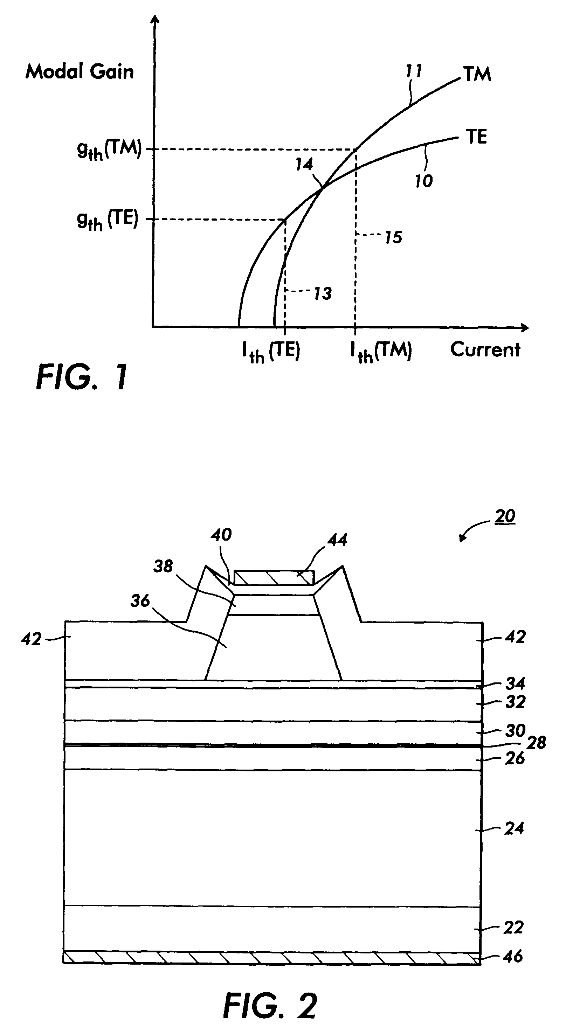

This polarization selectivity mechanism is demonstrated by the polarization-dependent gain-current characteristics shown in Figure 1. Modal gain is plotted as a function of device current, for both the TM- and TE-modes. The modal gain, g, for both TM- and TE-modes is plotted vertically along the y coordinate, and current, I, for both modes is plotted horizontally along the x coordinate. The curve 10 labeled TE shows the gain characteristic for the TE-mode, and the curve 11 labeled TM shows the gain characteristic for the TM-mode. Under certain conditions, the quantum well, when caused to lase at the lower threshold current 13 will emit TE-polarized radiation because the TE gain is higher for that current. Under other conditions, usually by introducing loss, when the threshold current exceeds the crossover 14, a quantum well laser will lase in the TM-mode because the TM gain is higher for that current as indicated by line 15.

Reference is now made to Figure 2 wherein is described the basic III-V semiconductor alloy diode laser 20 of the present invention. The semiconductor laser structure 20 has a GaAs substrate 22 on which is epitaxially deposited, in a known manner, a succession of semiconductor layers comprising, in order, an $(Al_xGa_{1-x})_{0.5}In_{0.5}P$ ($0.6<x_{clad}<1.0$) N-cladding layer 24, an $(Al_xGa_{1-x})_{0.5}In_{0.5}P$ ($0.2<x_{SCH}<0.6$) lower N-confinement layer 26, a $Ga_zIn_{1-z}P$ quantum well 28, an $(Al_xGa_{1-x})_{0.5}In_{0.5}P$ ($0.2<x_{SCH}<0.6$) upper P-confinement layer 30, an $(Al_xGa_{1-x})_{0.5}In_{0.5}P$ ($0.6<x_{clad}<1.0$) P-cladding layer 32, a $Ga_zIn_{1-z}P$ ($0.5<z_{ES}<0.7$) etch stop layer 34, an $(Al_xGa_{1-x})_{0.5}In_{0.5}P$ ($0.6<x_{clad}<1.0$) or $Al_yGa_{1-y}As$ ($y>0.8$) P-cladding ridge layer 36, an $(Al_xGa_{1-x})_{0.5}In_{0.5}P$ barrier reduction layer 38, graded or stepped from $x=x_{clad}$ to $x=0$, a GaAsP+ cap layer 40, and N-type GaAs flanking layers 42 selectively regrown. The laser structure 20 can be fabricated by a technique such as metalorganic chemical vapor deposition (MOCVD) as is well known in the art. The layers of the laser structure are of the conventional thicknesses.

A p-ohmic metal electrode 44 is formed on the cap layer 40 and a n-ohmic contact metal electrode 46 is formed on the substrate 22. Not shown are the usual reflecting facets forming the optical cavity with and perpendicular to the quantum well active layer 28 at opposite ends of the laser structure 20.

It is possible to adjust exactly the thickness and composition of a single quantum well, so that the light hole and the heavy hole band edges are degenerate or very nearly degenerate. In this case, a TE-mode/TM-mode switchable device can be made roughly similar. The polarization of the laser emission will be determined by the threshold gain, and the gain-current relationship for each mode as described in connection with Figure 1.

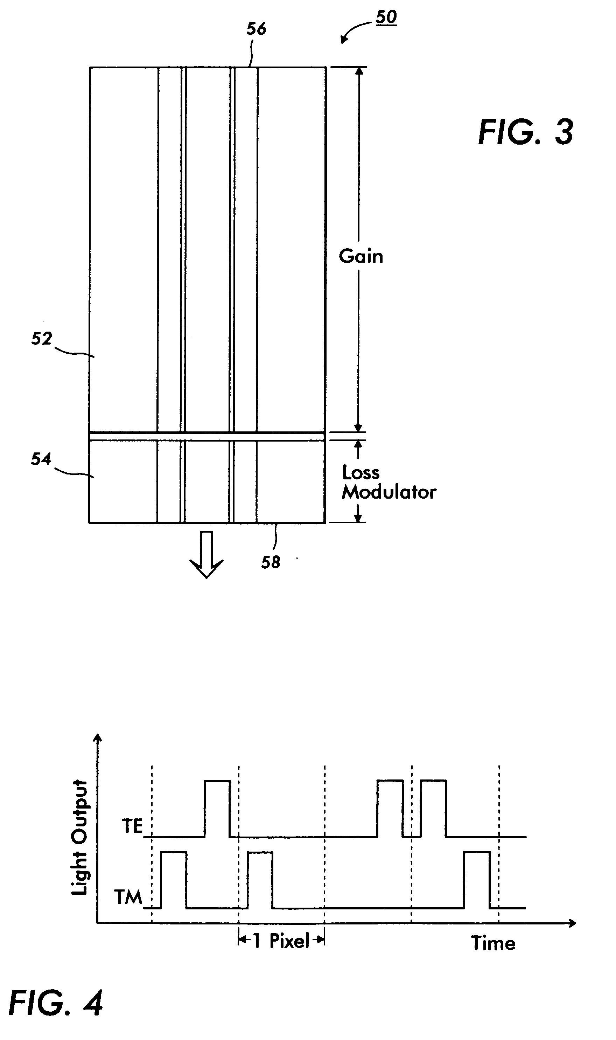

To achieve polarization switching in an exactly-adjusted single QW, the gain-current relationship must have certain characteristics. As shown in Figure 1, the transparency current must be lowest in one polarization, curve 10, while the peak gain is greatest in the orthogonal polarization, curve 11. Therefore, one polarization, TE, has a lower threshold current, while the other (higher gain) polarization, TM, only oscillates if the threshold gain is increased. This can be achieved, for example, by including an intracavity loss modulator section in the device, as shown schematically in Figure 3.

Figure 3 schematically illustrates a top view of a laser structure 50 with an elongated active section 52 coupled to a modulator section 54. The lasing beam oscillates vertically between a reflecting face 56 at the top end and another reflecting facet 58 at the bottom end. Biasing means for the modulator section are not shown. Such a modulator section 54 is lossy when unpumped or biased below transparency, increasing the threshold gain enough that the high-gain polarization oscillates. In contrast, when the modulator is biased above transparency, the low-threshold polarization oscillates. Hence, by applying suitable bias potentials to the modulator section, the lasing action can be switched from the TM-mode to the TE-mode, and vice versa. Thus, the Figure 3 embodiment schematically illustrates a laser 50 with switchable polarization modes.

A layer structure capable of either TE- or TM-mode emission can also include separate quantum wells for TE and TM mode gain. One QW will be tensile-strained providing TM-mode gain while the QW is compressed or lattice matched providing TE-mode gain. For a two-QW laser structure the transition wavelength must be well-matched for both QWs.

As in the case of a single exactly adjusted quantum well, the polarization will depend on the gain and loss characteristics. In principle, the quantum wells can be adjusted so that one polarization has a lower transparency current, while the other has a higher gain. Therefore, the lowest threshold polarization emits coherent light when the loss is low, and the high gain (and higher threshold) polarization dominates when an additional loss is introduced.

The two-QW laser structure is similar to that of Figures 2 and 3, except that the second quantum well layer for TE-mode is added.

The present invention is not limited to achieving TE- and TM-mode QW lasers in the same monolithic structure by varying the thickness and/or composition of the active quantum well layer. If an active layer is in near degeneracy at the band edge, then whether the laser will oscillate in the TE- or TM-mode will depend upon other factors, such as, the diode geometry, its threshold current, its reflectivity, temperature, cavity length, etc. Hence, in accordance with this aspect of the invention, the active layer is given the same composition and thickness, preferably lying on the crossover point.

In this type of laser structure, the polarization is determined by the threshold gain. If the threshold gain is low, corresponding to a long cavity or highly reflecting facets, the low transparency polarization of TE will result. If the threshold gain is increased to a point where the TM-mode gain is lowest, the high-gain TM polarization results.

Since the laser polarization is determined by the threshold gain, the polarization can be controlled by fabricating a laser structure which allows changes in the threshold gain. The laser cavity includes structures for both optical gain and loss. The gain is addressed by changing the current to the gain section while the loss is adjusted by changing the bias of the intracavity loss modulator.

When the modulator section 54 is left unbiased, or when biased below the transparency current density, it is optically absorptive introducing loss. Even higher loss can be introduced by reverse-biasing the loss modulator to red-shift its absorption edge via the quantum-contained Stark effect. This would require very good electrical isolation between the gain and loss sections, however. When the loss modulator is biased below transparency, the threshold gain is increased.

The method of modulation for polarization multiplexing raises the threshold gain, as shown in Figure 1. The threshold gain ($g_{th}$) is:

$$g_{th}=\alpha_a+(1/L_a)\ln(1/\sqrt{(R_{f(r)})}+(L_m/L_a)\alpha_m \qquad \text{(Equation 1)}$$

where

$\alpha_a =$      distributed loss in active laser cavity
$R_{f(r)} =$      front (rear) facet reflectivities

$L_{m(a)} =$      length of modulator (active laser) cavities
$\alpha_m =$      modal absorption loss in modulator section

However, when the modulator section is sufficiently forward biased to transparency ($\alpha_m=0$), the threshold gain is simply that for a laser without any modulator section (i.e., the last term disappears in the equation above). When biased even further to provide optical gain ($\alpha_m<0$), the threshold gain is further reduced. When the modulator is unbiased, reverse biased, or subtransparency forward biased, it is lossy ($\alpha_m>0$) and the threshold gain is increased. Thus, the modulator section can be used to change the intracavity loss, and with the appropriate gain-current-polarization characteristics it will also change the polarization.

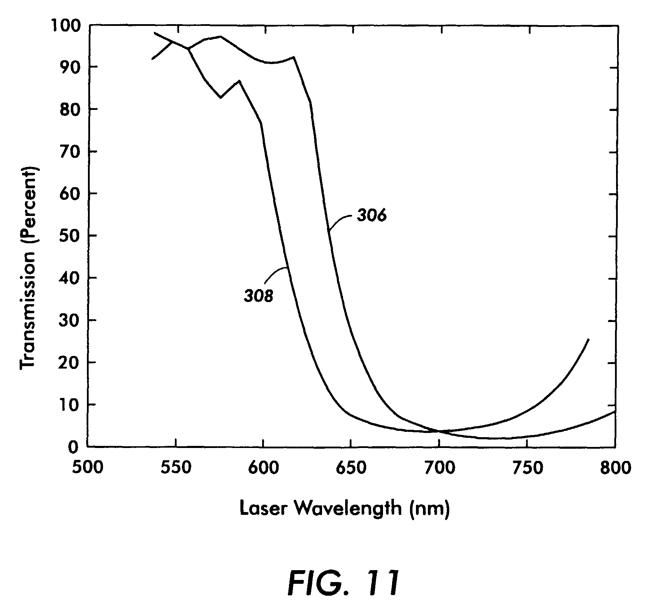

The overall cavity's length is chosen so that, in the active layer, the lower threshold mode (the TE-mode in Figure 11) will oscillate when the modulator section is biased to transparency (if the cavity length $L_a$ is too short, only the higher-gain mode will oscillate). The length $L_m$ and bias of the modulator section t are chosen such that when its current is reduced below transparency, the threshold gain increases enough that the active layer will oscillate with TM-polarization (with higher peak gain).

There are two basic methods of modulation for polarization multiplexing: (1) current switching using modulation loss regions which is straight-forward but requires fast switching of current, as described above, and (2) quantum-confined Stark effect (QCSE) switching which is fast because it is a field effect but which requires better electrical isolation between gain and modulator sections.

In QCSE switching, the modulator is reverse-biased, thereby drawing no current. As the reverse bias voltage increases, the electric field at the p-n junction also becomes greater. This electric field appears across the active region. With a quantum well active region, the increased electric field causes the absorption edge to shift to lower energy. Using the QCSE, the absorption can be very large, and the absorption edge can also be tuned across the laser wavelength. Furthermore, it is inherently very fast, having been used to achieve GHz modulation speeds in laser diodes. This is because QCSE is a field effect and does not involve any changes in the carrier concentration.

The one drawback to a QCSE modulator is that it requires better electrical isolation between the gain and modulator sections than a fast current switching method because the QCSE modulator is reverse-biased. There is more than 2 volts potential difference between the modulator contact and the gain contact. In contrast when the modulator is slightly forward biased, there will only be a zero to 2 volt potential difference between those two contacts.

While one laser embodiment has one quantum well, it will be understood that the device can incorporate in each laser two quantum wells as previously described or more than two quantum wells.

It will be understood that Figure 1 is only one example of the TE-mode/TM-mode gain-current relationship. Other structures or compositions may exhibit variations of the Figure 1 curves, though the underlying principles will be the same.

Standard electronic circuitry will control the polarization of the polarization multiplexing laser diode. The lead connections will connect the substrate contact, top laser contact and modulator section. Controllers control the operation by determining when the diode will fire and the electronic signals to the modulator section from the controllers determine its biased state and therefore whether the laser behaves optically transparent or optically absorbent. Within a limited range of modulation biases, the modulator sections alone can be used to switch the lasers on and off.

The use of a polarization-multiplexed laser is different from that of a typical laser diode, principally in that the modulation is between three states, not two: OFF, ON-TE, and ON-TM. Usually, the two ON states should have equal power emitted. Since one polarization has a higher threshold, however, the bias to the gain section could also be modulated to keep the TE- and TM-mode power constant. Power may also be modulated by feedback loops as are known in the art.

With the polarization multiplexed laser, it is not possible to write both TE- and TM-mode polarized data at exactly the same time because the laser polarization is never a combination of both modes. One signal of one polarization mode can be delayed with respect to the other signal of the other polarization mode so that each spot is written within one pixel time. As shown in Figure 4, there are four possible timing sequences for writing data using both TE-mode and TM-mode from a single polarization multiplexed laser diode: TM-mode then TE-mode within a single pixel, TM-mode alone in a single pixel, TE-mode alone in a single pixel or TE-mode then TM-mode within a single pixel.

Of great importance for polarization multiplexed printing applications is the speed at which each beam is modulated. Data rates for high speed printing are on the order of 100 to 200MHz. At 200MHz, each pixel on the scan line corresponds to 5ns. Since a semiconductor laser's fundamental frequency response is in the range of several GHz, it is possible, in principle, to incorporate several data pulses in the time required to write one pixel.

If the loss modulator is used to both to extinguish the beams and to switch polarizations, the modulation rate could be extremely fast. The gain section bias would be constant with no time consuming changes in carrier density required. Furthermore, if the electroabsorption property of a reverse-biased QW is the basis for the loss modulator's operation, the loss could be switched by the internal field, also without changing the injected current density. In this case too, the modulation rate could be extremely fast.

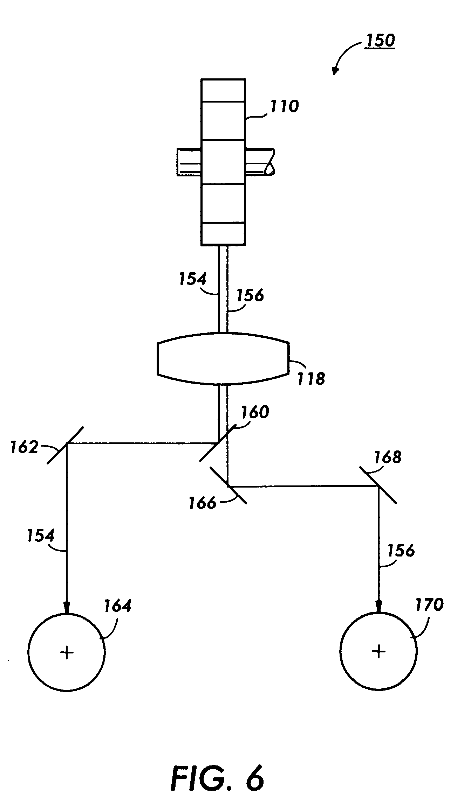

Although the information for two positions is time encoded on the beam emitted by a single laser, separation of the information is accomplished with passive invariant polarization-based beam separators as illustrated in the raster output scanning system of Figure 6.

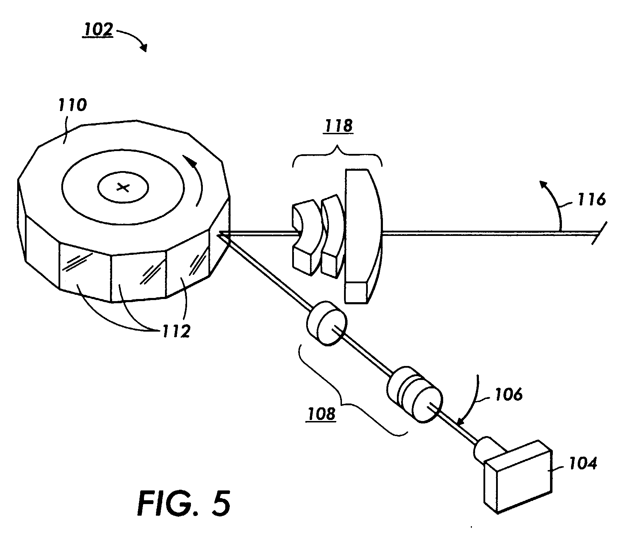

A perspective, schematic view of a basic raster output scanner 102 as used in the illustrated embodiments of the present invention is described with reference to Figure 5. Raster output scanner 102 includes a laser source 104 (the polarization multiplexing laser structure 20 of Figure 2) that outputs multiple laser beams 106 (two beams shown in Figure 5) from a substantially common spatial location. For purposes of clarity, only the chief rays are shown. Each beam is independently modulated with data appropriate to expose a photoreceptive element in accordance with a desired image. An input optical system 108 serves to direct laser beams 106 onto overlapping coaxial optical paths such that they illuminate a rotating polygon 110 having a plurality of facets 112. The rotating polygon 110 repeatedly and simultaneously deflects the laser beams in the direction indicated by the arrow 116. The deflected laser beams are input to a single set of imaging and correction optics 118, which focus the laser beams and correct for errors such as polygon angle error and wobble.

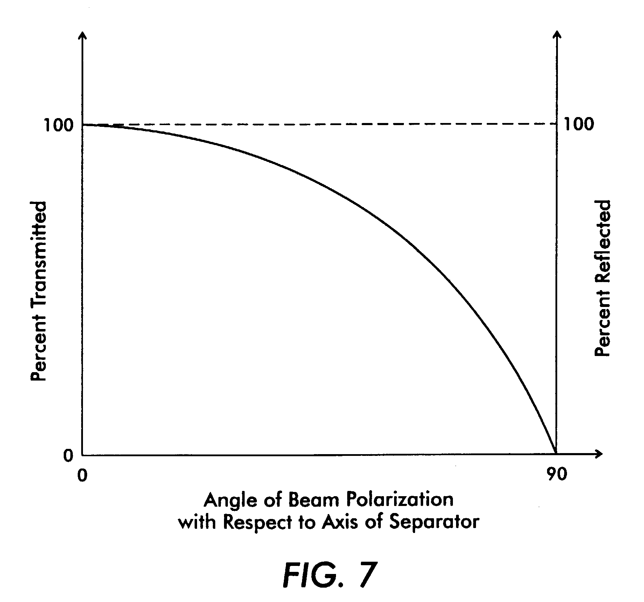

The raster output scanner 102 is used in a first embodiment apparatus 150 as illustrated in Figure 6 (not all components of the scanner being shown in Figure 6). In this embodiment, the raster output scanner 102 outputs two laser beams designated 154 and 156. In the illustrated embodiment, those beams have substantially the same optical wavelength, but are linearly polarized in orthogonal directions in the plane perpendicular to their propagation direction. Again, only the chief rays are shown. A polarized beam separator 160 separates the laser beams 154 and 156 after they pass through correction optics 118. The beam separator 160 is a polarization selective, multiple layer film, having the optical characteristics shown in Figure 7. Details of the beam separator 160 are subsequently described in more detail. A mirror 162 reflects the separated laser beam 154 onto a photoreceptor 164, while mirrors 166 and 168 reflect laser beam 156 onto a photoreceptor 170.

The apparatus 150 may be used for two color printing where the image created on each photoreceptor corresponds to a different system color. The optical components 160, 162, 166, and 168 are oriented so that the optical path lengths from the laser source 104 (not shown) to the photoreceptors 164 and 170 are substantially equal. To reduce the problems associated with coaxially aligning the beams, obtaining equal optical path lengths, and registering the laser spots on different photoreceptors, the dual laser beam apparatus of Figure 6 uses a polarization multiplexing laser structure 20 of Figures 2 and 3 that generates coaxially overlapping, cross-polarized laser beams with a common spatial origin for both laser beams.

As previously mentioned, the polarized beam separator 160 has optical transmission/reflection characteristics as shown in Figure 7. The laser beam 156 is aligned to be linearly polarized at 0° with respect to the axis of the polarized beam separator 160, while coaxial laser beam 154 is linearly polarized at 90° with respect to the axis of the polarized beam separator. Therefore, laser beam 156 passes through the polarized beam separator 160, while laser beam 154 is reflected at nominally 45° with respect to the direction of propagation of laser beams. Polarized beam separators are well known to those in the applicable arts. Reference may be made to Vol. 10 of Applied Optics and Optical Engineering, edited by R.R. Shannon and J.C. Wyant, CHAPTER 10, PP 51-52.

Since the apparatus illustrated in Figure 6 simultaneously forms, sweeps, and deflects two laser beams, and since both laser beams are from substantially the same spatial location and have substantially parallel optical axes, similarly dimensioned beams are input to the polarized beam separator 160. Thus the problem of maintaining equal optical path length for each beam reduces to the much simpler problem of maintaining substantially equal optical path lengths from the polarized beam separator 160 to the photoreceptors 164 and 170. Substantially equal optical path lengths are set by properly positioning mirrors 162, 166, and 168. Equalization of optical path lengths results in similarly dimensioned spots at each photoreceptor. Additionally, the problem of registration is reduced since the characteristics of the mirror surface area and the related optics which respectively sweep and form both beams are common to both beams. Furthermore, since both beams are nominally at the same wavelength, the beam forming optics do not have to be designed to simultaneously focus two wavelengths at the same distance.

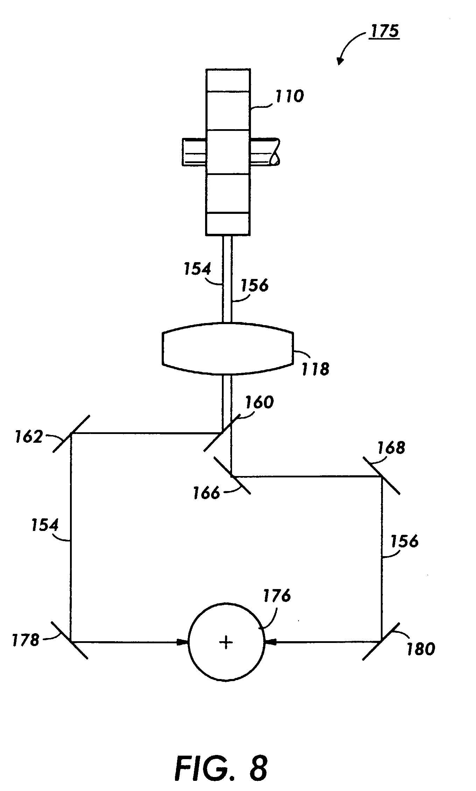

Figure 8 shows a simplified schematic view of a second embodiment apparatus 175. Apparatus 175 is a single station/multiposition printer using the raster output scanner 102, including polygon 110 and optics 118, to simultaneously deflect two laser beams across spatially separated regions of one moving photoreceptor 176. As with apparatus 150, each laser beam has nominally the same optical wavelength but is orthogonally polarized with respect to the other. A polarized beam separator 160 separates the laser beams after they pass through the correction optics 118. In apparatus 175, mirrors 162 and 178 serve to direct the deflected laser beam 154 onto photoreceptor 176, while mirrors 166, 168 and 180 serve to direct laser beam 156 onto a separate region of photoreceptor 176. By incorporating a means for transferring each image to paper, a two color xerographic print engine may be produced. Although details of the structure and operation of such means are beyond the scope of the present disclosure, they are well known to those skilled in the art. Nevertheless, it is evident that utilization of the present invention in conjunction with a single photoreceptive drum or belt provides advantages similar to those described in conjunction with two separate xerographic stations.

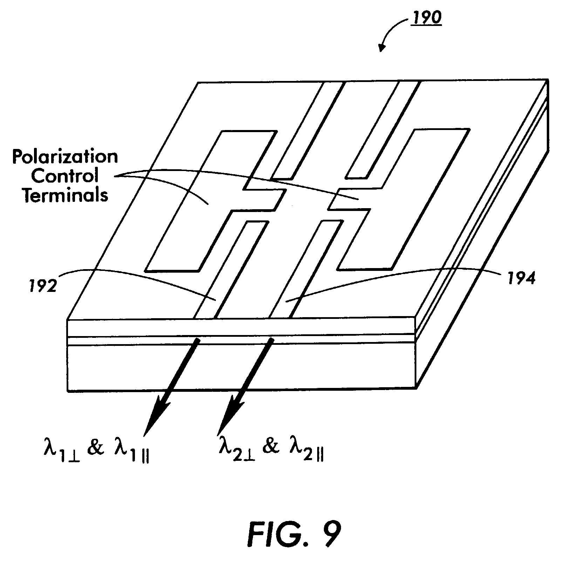

The semiconductor laser source 190 of Figure 9 consists of two polarization multiplexed lasers 192 and 194 emitting light at different wavelengths. The first laser 192 will emit light in both the TE- and TM-mode, as discussed previously in Figure 2, at a first wavelength. The second laser 194 will emit light in both the TE- and TM-mode, as discussed previously in Figure 2, at a second wavelength different from the first wavelength. Fabricating adjacent lasers which emit different wavelengths of light in a monolithic or non-monolithic structure is known in the art. The four beams with dissimilar wavelengths and dissimilar polarization states are emitted by a two-laser source.

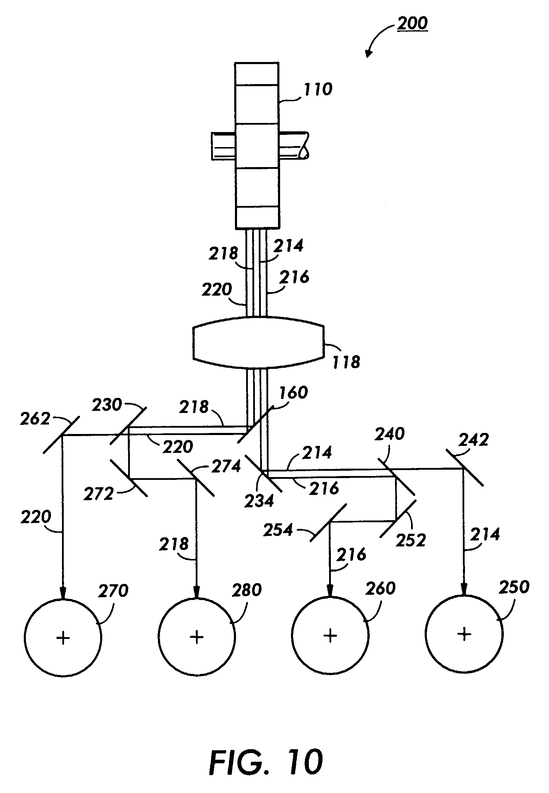

Figure 10 shows a simplified, schematic view of a third embodiment apparatus 200 in which four laser beams, designated laser beams 214, 216, 218, and 220, are simultaneously scanned across four moving photoreceptors 250, 260, 270, 280. Again, only the chief rays are shown. The apparatus 200, a multiple station printer, uses the raster output scanner 102, including polygon 110 and optics 118 and laser device 104, such as the semiconductor laser source 190 of Figure 10, to produce the four laser beams (not all components of the raster output scanner 102 are shown in Figure 11). The laser beams 214, 216, 218, 220 are input to a polarized beam separator 160 (whose characteristics are discussed above and whose use is discussed below). Two of the beams, i.e. laser beams 216 and 218, nominally have the same wavelength, for example 650nm, but are linearly polarized at 90° with respect to the axis of the polarized beam separator 60. The other two laser beams, i.e. laser beams 214 and 220, nominally have the same wavelength, for example 600nm, which differs from the wavelength of laser beams 216 and 218. Laser beams 214 and 216 are aligned to be linearly polarized at 0° with respect to the axis of a polarized beam separator 60.

Since the polarized beam separator 160 has the optical transmission/reflection characteristics shown in Figure 7, polarized beam separator 160 separates the overlapping laser beams 214 and 216 from laser beams 218 and 220. Laser beams 218 and 220 are input into a dichroic beam separator 230, while laser beams 214 and 216 first reflect off of a mirror 234 and are then input into a dichroic beam separator 240. The dichroic beam separators 230 and 240 are wavelength selective multiple layer films having optical characteristics similar to those shown in Figure 11 (discussed below). Thus, the dichroic beam separator 230 separates the overlapping beams 218 and 220, while the dichroic beam separator 240 separates the overlapping beams 214 and 216. A mirror 242 then reflects the separated laser beam 214 onto a photoreceptor 250, while mirrors 252 and 254 reflect the separated laser beam 216 onto a photoreceptor 260. Similarly, a mirror 262 reflects the separated laser beam 220 onto a photoreceptor 270, while mirrors 272 and 274 reflect the separated laser beam 218 onto a photoreceptor 280. Since each laser beam is independently modulated with image information, a distinct latent image is simultaneously printed on each photoreceptor. Thus apparatus 200 may be used for full color reproduction, wherein the image on each photoreceptor corresponds to a different system color.

The apparatus of Figure 10 uses a laser device 190 shown in Figure 9 that generates four coaxially overlapping, cross-polarized laser beams of two dissimilar wavelengths using either a monolithic diode laser array or two non-monolithic diode lasers closely spaced in a single integrated package. The use of two wavelengths considerably simplifies the construction of the laser device and the requirements placed on the photoreceptive elements. Similarly, the use of two polarization states from a single multiplexed laser also simplifies the construction of the laser device and the requirements placed on the photoreceptive elements.

As mentioned, the dichroic beam separators 230 and 240 have the transmission/reflection characteristics shown in Figure 11. In Figure 11, the curve 306 represents the characteristics of the optical filter when light strikes at a 45° angle of incidence, while curve 308 represents the filter's characteristics when light strikes at a 60° angle of incidence. Thus for two wavelengths appropriately matched to the optical characteristics, e.g. 600nm and 650nm, changes in the transmission/reflection characteristics of the dichroic beam separators as the laser beams are scanned through angles as large as 15° have inconsequential effects on the apparatus performance. Such dichroic mirrors are well known in the art. Reference may be made to Volume 1 of "Applied Optics and Optical Engineering", (1965) edited by R. Kingslake, for example, at chapter 5, number IV and chapter 8, numbers VIII and IX.

Since the system illustrated in Figure 10 simultaneously forms, sweeps, and corrects each beam, and since all beams are from substantially the same spatial location and have substantially parallel optical axes, similarly dimensioned beams are input to the polarized beam separator 160. Thus the problem of maintaining equal optical path lengths for each beam reduces to the much simpler problem of maintaining substantially equal optical path lengths from the polarized beam separator 160 to the individual photoreceptors. Substantially equal optical path lengths are set by adjusting the individual optical path lengths by properly positioning mirrors 234, 242, 252, 254, 262, 272, and 274. Additionally, the problem of registration is reduced since the characteristics of the mirror surface area and related optics which sweep and form the beams are simultaneously shared by all of the beams.

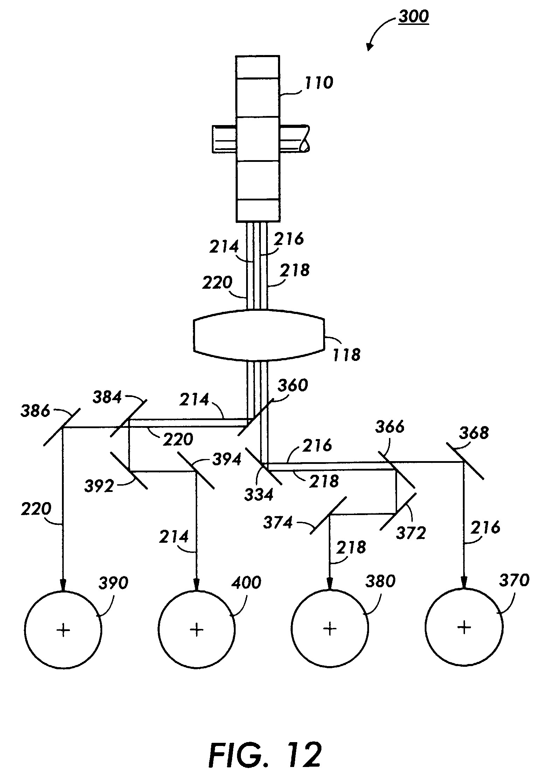

Figure 12 shows a simplified schematic view of a fourth embodiment apparatus 300 in which four laser beams are simultaneously scanned across four moving photoreceptors. Again, only the chief rays are shown. Apparatus 300 is a multiple station printer that uses the raster output scanner 102 (not all of whose components are shown in Figure 12), including polygon 110 and optics 118, to simultaneously deflect four laser beams, designated laser beams 214, 216, 218, and 220, which are obtained from laser device 190 shown in Figure 9. The four laser beams in Figure 12 are identical to the four laser beams described in conjunction with Figure 10 and may thus be derived from the same laser source 104. However, in the embodiment shown in Figure 12, a dichroic beam separator 360, having optical characteristics similar to those shown in Figure 11, first separates laser beams 216 and 218 from laser beams 214 and 220. A polarized beam separator 366, having transmission characteristics as shown in Figure 7, then separates the overlapping beams 216 and 218. Mirror 368 directs the separated laser beam 216 onto a photoreceptor 370, while mirrors 372 and 374 reflect separated laser beam 218 onto a photoreceptor 380. Similarly, a polarized beam separator 384, having transmission characteristics substantially similar to those of polarized beam separator 366, separates overlapping beams 214 and 220. A mirror 386 reflects the separated laser beam 220 onto a photoreceptor 390, while mirrors 392 and 394 reflect the separated laser beam 214 onto a photoreceptor 400. Since each laser beam is independently modulated with image information, distinct latent images are simultaneously impressed on each photoreceptor. Thus, the apparatus 300 is suitable for full color reproduction, wherein each laser beam produces a distinct latent image on its associated photoreceptor which corresponds to its associated system color, substantially as described in conjunction with the embodiment of Figure 10.

The above described method and apparatus is particularly advantageous when combined with other sections of a xerographic printer. Such other sections include, for example, a photoreceptive belt or drum, means for moving the photoreceptor, means for charging the photoreceptor, means for forming a latent image on the photoreceptor, means for transferring the latent image to paper, means for erasing the latent image from the photoreceptor, means for cleaning the photoreceptor, paper transport means, and means for fusing the image onto the paper.

Polarization multiplexing involves a single laser switching the polarization of the emitted laser beam between two orthogonal polarization states during each pixel time. This system uses fast laser switching with the polarization multiplexed laser and passive optical separation components.

There are several advantages to a polarization multiplexing laser raster output scanning system as described herein.

The number of different lasers required for the multiple beam raster output scanning system is halved. The complexity of the semiconductor laser source is significantly reduced, especially in the arrangement of the electrical contacts required to separately address each laser in the array. The field of view of the ROS optics is significantly reduced since the physical extent of the laser array is decreased.

The single multiplexed polarization laser source, which is rapidly and independently addressable, emits two beams of different polarizations which are coincident. This laser source simplifies the optical system of the raster output scanning system and the modulation scheme.

A single semiconductor laser growth can be used to make a dual polarization structure. Traditionally, multiple growths were required for a dual polarization structure with separate growths for each polarization. Multiple growths reduces yield and requires more difficult processing.

The wavelength for each polarization is very close (within 5nm) since the two beams come from the same laser active region. Therefore, chromatic dispersion problems in the optics are avoided. In the multiple growth approach, wavelengths must be well-matched for two separate different growths, limiting yield.

Since both beams are emitted from the same aperture, registration between the two positions is very good.

On the other hand, the peak power required from each laser is increased since each pixel time is effectively halved. The average power required from each laser is doubled since each laser is printing two channels. However, the requisite power increases are well within current semiconductor structure technology.

The clock rate for the system is doubled and consequently the electronics must be twice as fast. However, the needed electronics are well within current semiconductor structure technology.

Pixel placement at multiplexed positions may need tangential compensation to correct for the non-simultaneous emission of the pixels from the same laser. A parallel plate may be used to move the appropriate pixel tangentially or unequal path lengths to the multiplexed positions may be used to achieve simultaneous exposures on the photoreceptor(s).

While the invention has been described in conjunction with specific embodiments, it is evident to those skilled in the art that many alternatives, modifications and variations will be apparent in light of the foregoing description. Accordingly, the invention is intended to embrace all such alternatives, modifications and variations as fall within the scope of the appended claims.

**Claims**

1. A raster output scanner (150; 175; 200; 300) comprising:-

   polarization multiplexing means (50; 190) for producing at least first and second coaxially overlapping, orthogonally polarized laser beams (154, 156; 214, 216, 218, 220) on a first optical path;

   means (110, 112) for sweeping the coaxially overlapping, orthogonally polarized laser beams (154, 156; 214, 216, 218, 220) onto a second optical path; and

   optical beam separating means (160; 360) disposed on the second optical path for separating and directing at least the first laser beam (154; 214; 218) onto a third optical path and at least the second laser beam (156; 214; 218) onto a fourth optical path.

2. A raster output scanner (200) according to claim 1, wherein the polarization multiplexing means (190) produces first, second, third, and fourth overlapping and coaxial laser beams (214, 216, 218, 220) onto the first optical path, the first and second laser beams (214, 216) having differing wavelengths and a first polarization, and the third and fourth laser beams (218, 220) having differing wavelengths and a second polarization, the first and second polarizations differing; the optical beam separating means (160) comprising an optical polarized beam separator which separates and directs the first and second laser beams (214, 216) onto the third optical path and the third and fourth laser beams (218, 220) onto the fourth optical path; and further including first and second dichroic beam separators (230, 240) respectively disposed on the third and fourth optical paths, the first dichroic beam separator (240) directing the first and second laser beams (214, 216) onto respective fifth and sixth optical paths, and the second dichroic beam separator (230) directing the third and fourth laser beam (218, 220) onto respective seventh and eighth optical paths.

3. A raster output scanner according to claim 2, wherein the first and third laser beams (214, 216) are from a first single polarization multiplexing laser source and the second and fourth laser beams (218, 220) are from a second single polarization multiplexing laser source.

4. A raster output scanner (300) according to claim 1, wherein the polarization multiplexing means (190) produces first, second, third, and fourth overlapping and coaxial laser beams (214, 216, 218, 220) onto the first optical path, the first and fourth laser beams (214, 220) having differing polarizations and a first wavelength, the second and third laser beams (216, 218) having differing polarizations and a second wavelength, the first and second wavelengths differing; the optical beam separating means (360) comprising a dichroic beam separator which separates and directs the first and fourth laser beams (214, 220) onto a third optical path and the second and third laser beams (216, 218) onto a fourth optical path, and further includes first and second optical polarized beam separators (366, 384) respectively disposed on the third and fourth optical paths, the first polarized beam separator (384) directing the first laser beam (214) onto a fifth optical path and the fourth laser beam (220) onto a sixth optical path, and the second polarized beam separator (366) directing the second laser beam (216) and the third laser beam (218) onto respective seventh and eighth optical paths.

5. A raster output scanner according to claim 4, wherein the first and fourth laser beams (214, 220) are from a first single polarization multiplexing laser source and the second and third laser beams (216, 218) are from a second single polarization multiplexing laser source.

6. A raster output scanner (150; 175; 200; 300) according to any one of claims 1, 2 or 4, further including first photoreceptor means (164; 176; 400; 280) and first directing means (162; 162, 178; 384, 393, 394; 230, 272, 274) for directing the first laser beam (154; 214; 218) onto the first photoreceptor means (164; 176; 400; 280) to create a first image thereon in response to the first laser beam (154; 214; 218).

7. A raster output scanner (175) according to claim 6, further including second directing means (166, 180) for directing at least one other laser beam (156) onto the first photoreceptor means (176) to create further images thereon in response to the other laser beam(s) (156) such that the first and other images are created on respective separate regions of the first photoreceptor means (176).

8. A raster output scanner (150) according to claim 6, further including second photoreceptor means (170) and second directing means (166, 168) for directing the second laser beam (156) onto the second photoreceptor means (170) to create a second image thereon in response to the second laser beam (156).

9. A raster output scanner (150; 175) according to claim 8, wherein the first and second laser beams (154, 156) are from a single polarization multiplexing laser source, and the optical beam separating means (160) comprises an optical polarized beam separator.

10. A raster output scanner (200; 300) according to claim 6, further including second, third, and fourth photoreceptor means (250, 260, 270; 370, 380, 390) and second, third and fourth directing means (234, 242, 252, 254, 262, 272, 274; 368, 372, 374, 386, 392, 394) for directing the second, third, and fourth laser beams (214, 216, 220; 216, 218, 220) onto respective ones of the second, third and fourth photoreceptor means ( 250, 260, 270; 370, 380, 390) to create second, third, and fourth images thereon in response to the second, third, and fourth laser beams (214, 216, 220; 216, 218, 220).

FIG. 1

FIG. 2

FIG. 3

FIG. 4

FIG. 5

_150_

_110_

_154_

_156_

_118_

_160_

_162_

_168_

_166_

_154_

_156_

_164_

_170_

# FIG. 6

FIG. 7

*FIG. 8*

FIG. 9

*200*

*110*

*218* *214*

*216*

*220*

*118*

*230* *218* *160*

*262* *214*

*240* *242*

*220* *274*

*272* *216*

*234* *216*

*220* *254* *252*

*218* *216* *214*

*270* *280* *260* *250*

# FIG. 10

FIG. 11

FIG. 12